Europäisches Patentamt

European Patent Office

Office européen des brevets

(19)

(11) Veröffentlichungsnummer : **0 036 506**
**B1**

(12) **EUROPÄISCHE PATENTSCHRIFT**

(45) Veröffentlichungstag der Patentschrift :
**18.01.84**

(51) Int. Cl.³ : **B 23 D 79/06**

(21) Anmeldenummer : **81101429.9**

(22) Anmeldetag : **27.02.81**

(54) **Vorrichtung zum Entfernen des beim Abstechen von Werkstücken stehenbleibenden Restmaterials.**

(30) Priorität : **20.03.80 DE 3010683**

(43) Veröffentlichungstag der Anmeldung :
**30.09.81 Patentblatt 81/39**

(45) Bekanntmachung des Hinweises auf die Patenterteilung : **18.01.84 Patentblatt 84/03**

(84) Benannte Vertragsstaaten :
**AT BE CH DE FR GB IT LI LU NL SE**

(56) Entgegenhaltungen :
**CH-A-    577 867**
**DD-A-     39 399**
**DE-C-    381 793**
**US-A- 2 282 648**
**US-A- 3 426 646**

(73) Patentinhaber : **Zinner GmbH.**
**Kirchenweg 69/71**
**D-8500 Nürnberg 90 (DE)**

(72) Erfinder : **Zinner, Karl**
**Buehlfelder Strasse 21**
**D-8500 Nürnberg 90 (DE)**

(74) Vertreter : **Patentanwälte Czowalla . Matschkur +
Partner**
**Königstrasse 1**
**D-8500 Nürnberg 106 (DE)**

# Vorrichtung zum Entfernen des beim Abstechen von Werkstücken stehenbleibenden Restmaterials

Die vorliegende Erfindung bezieht sich auf eine Vorrichtung zum Entfernen des beim Abstechen von Werkstücken stehenbleibenden Restmaterials, mit einer einstellbaren Werkstückaufnahme und einem oszillierend bewegbaren, mit einem Antriebsmotor verbundenen Schneidwerkzeug, das so angeordnet ist, daß das Werkstück mit der Abstech-Stirnfläche auf ihm abstützt.

Bei einer derartigen, aus der Schweizer Patentschrift 577 867 bekannt gewordenen Vorrichtung besteht zunächst die Schwierigkeit, daß die Gegenhalter — dort in Form einer drehbaren Platte mit Bohrungen unterschiedlichen Durchmessers — an die jeweiligen Werkstücke angepaßt sein müssen. Es mub also für das jeweils zu bearbeitende Teil ein gesonderter Gegenhalter angefertigt werden, d. h. eine im Durchmesser angepaßte Bohrung vorhanden sein, damit das Teil beim Abscheren des Restmaterials nicht abkippt. Darüber hinaus müssen die dort verwendeten Messer in umständlicher Weise nachgeschliffen werden, wobei schließlich noch hinzu kommt, daß ein exakt planes, jede Nacharbeit erübrigendes Entfernen des Restmaterials durch einen derartigen Abschervorgang praktisch nicht erzielbar ist. Dies ergibt sich nicht zuletzt dadurch, daß das Abschermesser an einem langen über einen Exzenter hin und her bewegten Hebelarm befestigt ist, der aufgrund seiner unvermeidlichen Lagertoleranzen und der ebenfalls nicht vermeidbaren Verbiegbarkeit ein exaktes Anliegen der Schneidkante des Schneidwerkzeugs an der Abstechoberfläche praktisch nicht gewährleisten kann.

Der Erfindung liegt daher die Aufgabe zugrunde, eine einfach aufgebaute, robuste und universell einsetzbare Vorrichtung zum Entfernen des beim Abstechen von Werkstücken stehenbleibenden Restmaterials zu schaffen, welche in einfacher Weise an beliebige Werkstücke anpaßbar ist und ein exakt planes Entfernen des Restmaterials bei gleichzeitiger Möglichkeit einer Halb- oder Teilautomatisierung, gewährleistet.

Zur Lösung dieser Aufgabe ist bei einer Vorrichtung der eingangs genannten Art gemäß der Erfindung vorgesehen, daß eine Schneidplatte lösbar auf einer oszillierend bewegbaren Tragplatte befestigt ist, die in einer Ausnehmung eines mit einer Werkstückanlage versehenen, in Bewegungsrichtung der Tragplatte stufenlos arretierbar verschiebbaren Spannschlittens an der Deckplatte des den Motor und/oder das Getriebe aufnehmenden Gehäuses derart gelagert ist, daß die Decktläche der Schneidplatte über die Schlittenoberseite übersteht und daß die Werkstückanlage eine im wesentlichen senkrecht zur Bewegungsrichtung der Schneidplatte angeordnete, am Spannschlitten befestigte Winkelanlagefläche umfaßt.

Durch die erfindungsgemäße Anordnung einer Schneidplatte auf einer unmittelbar oszillierend bewegbaren Tragplatte anstelle der Befestigung am Ende eines langen Tragarms ergibt sich eine wesentlich stabilere Anordnung und damit eine exakte Ausrichtbarkeit der Schneidkante gegenüber der Abstechstirnfläche. Die Verwendung einer Schneidplatte hat darüber hinaus den Vorteil, daß durch einflaches Verdrehen weitere Schneiden in Funktionsstellung gebracht werden können, ohne daß ein umständliches Nachschleifen erforderlich ist, das ja wegen der notwendigen Parallelität der neu angeschliffenen Schleifkante zur vorherigen Schleifkante außerordentliche Schwierigkeiten bereitet. Von besonderer Bedeutung ist darüber hinaus die einfache Ausbildung der Werkstückanlage, da diese ein Stufenloses Verstellen und damit einfaches Anpassen an beliebige Werkstücke ermöglicht. Zur Einstellung auf das jeweilige Werkstück ist es lediglich erforderlich, den Schlitten so weit zu verschieben, daß das abzutrennende Restmaterial an der Abstech-Stirnfläche zwischen der Werkstückanlage und der Schneidplatte liegt. Der vorzugsweise einstellbare Hub der Oszillierbewegung der Schneidplatte ist dabei vorteilhafterweise so gewählt, daß er nur wenig größer ist als der Durchmesser des zu entfernenden Restmaterials.

Die stufenlose Verstellbarkeit läßt sich in Ausgestaltung der Erfindung besonders einfach dadurch erzielen, daß der Schlitten mittels Spannpratzen am Gehäuse befestigbar ist.

Obgleich es in den meisten Fällen völlig ausreichend ist, das Werkstück, insbesondere wenn es von Hand zugeführt wird, lediglich in die Winkelanlagefläche einzulegen, so daß es sich mit seiner Abstech-Stirnfläche auf der Schneidplatte abstützt, können selbstverständlich zusätzliche Spanneinrichtungen zum Haltern des Werkstücks vorgesehen sein, was besonders dann von Vorteil ist, wenn Transporteinrichtungen zur Zu- und Abführung der Werkstücke vorgesehen sind, um einen automatisierten, taktgesteuerten Betrieb zu ermöglichen.

Besonders günstig gestaltet sich die Arbeitsweise der vorliegenden Erfindung, insbesondere in Hinblick auf die Vermeidung zusätzlicher Spannvorrichtungen, wenn die Bewegungsebene der Schneidplatte zur Horizontalen geneigt angeordnet ist, wobei die Winkelanlagefläche des Spannschlittens am unteren Ende liegt. Auf diese Weise wird nämlich das Werkstück bereits von vorneherein aufgrund seines Gewichts in die Winkelanlagefläche gedrückt.

Schließlich liegt es auch noch im Rahmen der Erfindung, die erfindungsgemäße Vorrichtung so auszugestalten, daß sie als ein an handelsübliche Elektromotoren anflanschbares, lediglich ein Getriebe mit einem Exzenterumlankgetriebe auf weisendes Bauteil ausgebildet ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen :

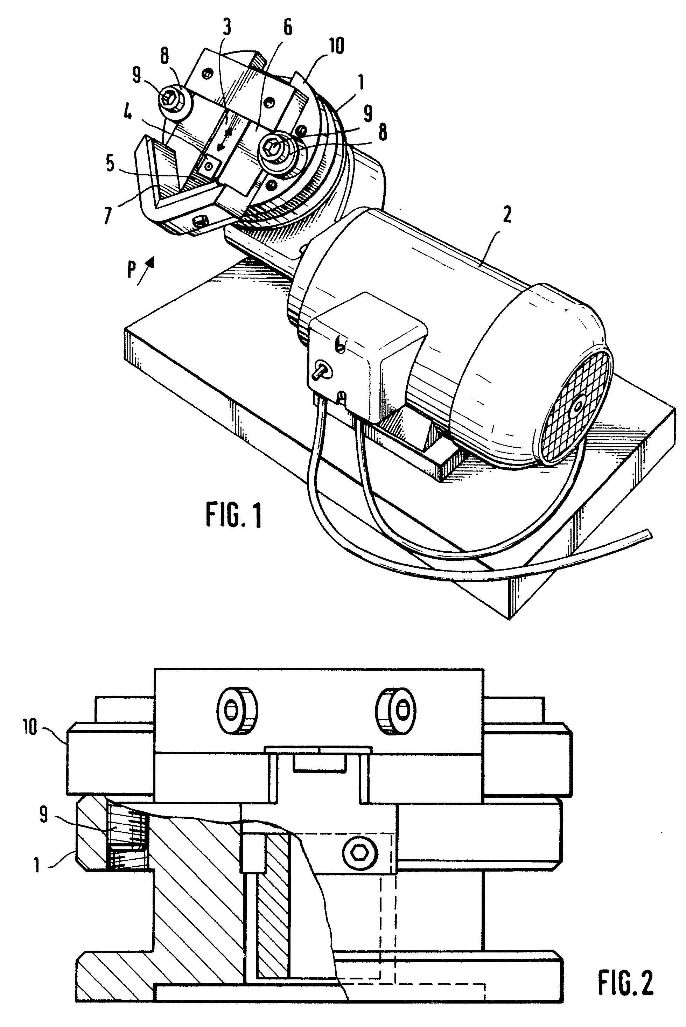

Figur 1 eine perspektivische Ansicht einer erfindungsgemäßen an einen Elektromotor angeflanschten Vorrichtung,

Figur 2 eine teilweise geschnittene Seitenansicht der Vorrichtung in Richtung des Pfeils P in Fig. 1 und

Figur 3 eine Draufsicht auf die erfindungsgemäße Vorrichtung.

Die erfindungsgemäße Vorrichtung umfaßt ein Gehäuse 1, welches im dargestellten Ausführungsbeispiel — selbstverständlich könnten auch Vorrichtungen mit integrierten Motoren gebaut werden — an einen Elektromotor 2 anflanschbar ist. Im Gehäuse 1 ist ein Exzenter-Umlenkgetriebe angeordnet, um eine Tragplatte 3, auf der eine Schneidplatte 4 auswechselbar befestigt ist, in Richtung des eingezeichneten Doppelpfeils in oszillierende Hin- und Herbewegung zu versetzen. Die Tragplatte 3 ist in einer Ausnehmung 5 eines Spannschlittens 6 gelagert, der am einen Ende mit einer Winkelanlagefläche 7 versehen ist, in der das zu bearbeitende Werkstück, beispielsweise ein abgestochener Zylinderabschnitt gehaltert ist. Die Tragplatte 3 mit der Schneidplatte 4 ist so angeordnet, daß die Abstech-Stirnfläche des Werkstücks sich auf der Oberseite der Schneidplatte 4 abstützt, d. h. nicht etwa auf dem Schlitten 6 aufliegt. Dadurch ist eine irgendwie geartete Justierung zur Abstech-Stirnfläche überhaupt nicht erforderlich. Der mittels Spannpratzen 8 und sie durchsetzenden Spannschrauben 9 an der Deckplatte 10 des Gehäuses 1 befestigbare Spannschlitten 6 wird je nach Durchmesser des zu bearbeitenden Werkstücks so eingestellt, daß das beim vorherigen Abstechprozess stehengebliebene Restmaterial im Zentrum der Abstechstirnfläche zwischen der Winkel anlagefläche 7 und der Abstechplatte 4 angeordnet ist. Der Bewegungshub der Schneidplatte 4 wird dann so bemessen, daß bei der Hin- und Herbewegung das stehengebliebene Restmaterial des Werkstücks vollständig abgeschnitten, insbesondere abgeschabt wird, was durch Ausbildung der Oberseite der Schneidplatte als feilenhiebartige Schabfläche besonders begünstigt wird. Es ergeben sich auf diese Weise völlig plane Abstechstirnflächen, die keinerlei irgendwie gearteter Nachbearbeitung mehr bedürfen.

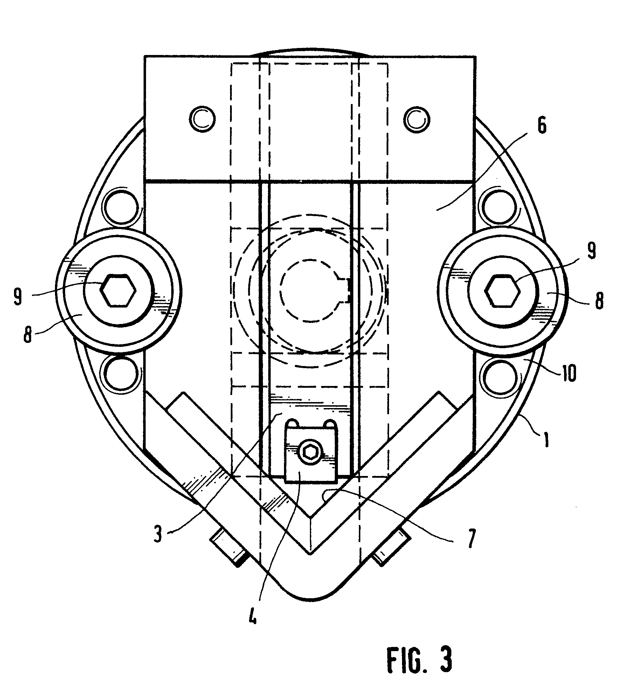

Die Ausbildung des Exzenter-Umlenkgetriebes ist lediglich strichliert in Fig. 3 mit angedeutet, da derartige Exzenterantriebe hinlänglich bekannt sind.

**Ansprüche**

1. Vorrichtung zum Entfernen des beim Abstechen von Werkstücken stehenbleibenden Restmaterials mit einer einstellbaren Werkstückaufnahme (6, 7) und einem oszillierend bewegbaren, mit einem Antriebsmotor (2) verbundenen Schneidwerkzeug (4), das so angeordnet ist, daß sich das Werkstück mit der Abstech-Stirnfläche auf ihm abstützt, dadurch gekennzeichnet, daß eine Schneidplatte (4) lösbar auf einer oszillierend bewegbaren Tragplatte (3) befestigt ist, die in einer Ausnehmung (5) eines mit einer Werkstückanlage versehen, in Bewegungsrichtung der Tragplatte (3) stufenlos arretierbar verschiebbaren Spannschlittens (6) an der Deckplatte (10) des den Motor und/oder das Getriebe aufnehmenden Gehäuses (1) derart gelagert ist, daß die Deckfläche der Schneidplatte (4) über die Schlittenoberseite übersteht und daß die Werkstückanlage eine im wesentlichen senkrecht zur Bewegungsrichtung der Schneidplatte (4) angeordnete, am Spannschlitten (6) befestigte Winkelanlagefläche (7) umfaßt.

2. Vorrichtung nach Anspruch 1, dadurch gekennzeichnet, daß die Oberseite der Schneidplatte (4) als feilenhiebartige Schabfläche ausgebildet ist.

3. Vorrichtung nach Anspruch 1 oder 2, dadurch gekennzeichnet, daß der Spannschlitten (6) mittels Spannpratzen (9) am Gehäuse (1) befestigbar ist.

4. Vorrichtung nach einem der Ansprüche 1 bis 3, dadurch gekennzeichnet, daß die Bewegungsebene der Schneidplatte (4) zur Horizontalen geneigt angeordnet ist, wobei die Winkelanlagefläche (7) des Spannschlittens (6) am unteren Ende liegt.

5. Vorrichtung nach einem der Ansprüche 1 bis 4, gekennzeichnet durch Spanneinrichtungen zum Haltern des Werkstücks.

6. Vorrichtung nach einem der Ansprüche 1 bis 5, gekennzeichnet durch vorzugsweise taktgesteuerte Transporteinrichtungen zur Zu- und Abführung der Werkstücke.

7. Vorrichtung nach einem der Ansprüche 1 bis 6, dadurch gekennzeichnet, daß sie als ein an handelsübliche Elektromotoren (2) anflanschbares Bauteil mit einem Exzenter-Umlenkgetriebe ausgebildet ist.

**Claims**

1. An apparatus for removing the residual material remaining upon the parting off of workpieces, comprising an adjustable workpiece holder (6, 7) with a cutting tool (4) which is arranged for oscillating movement, is connected to a drive motor (2), and is so disposed that the workpiece is supported on it by the parted-off end face characterised in that the cutting plate (4) is detachably secured to an oscillatingly movable mounting plate (3) which is supported in a recess (5) of a holding carriage (6), which is provided with an abutment for the workpiece and is desplaceable in a continuously lockable manner in the direction of movement of the mounting plate (3), on the cover plate (10) of the housing (1) receiving the motor and/or the gearing, in such a manner that the top surface of the cutting plate (4) projects above the top of the carriage and in that the abutment for the workpiece comprises an angled contact surface (7) which is disposed substantially perpendicular to the direction of movement of the cutting plate (4) and is secured to the holding carriage (6).

2. An apparatus as claimed in Claim 1, characterised in that the upper side of the cutting plate (4) is constructed in the form of a scraping surface like the cut of a file.

3. An apparatus as claimed in Claim 1 or 2, characterised in that the holding carriage (6) can be secured to the housing (1) by means of clamping shoes (9).

4. An apparatus as claimed in one of Claims 1 to 3, characterised in that the plane of movement of the cutting plate (4) is inclined in relation to the horizontal, the angled contact surface (7) of the holding carriage (6) lying at the lower end.

5. An apparatus as claimed in one of Claims 1 to 4, characterised by clamping devices to hold the workpiece.

6. An apparatus as claimed in one of Claims 1 to 5, characterised by preferably cyclically controlled conveying devices for supplying and removing the workpieces.

7. An apparatus as claimed in one of Claims 1 to 6, characterised in that it is constructed in the form of a unit with an eccentric oscillating drive, which can be flange-mounted on ordinary commercial electric motors (2).

## Revendications

1. Dispositif pour enlever la matière résiduelle demeurant lors du décolletage de pièces à usiner avec un réceptacle réglable (6, 7) de pièces à usiner comportant un outil de coupe (4) mobile par oscillations, reliée à un moteur d'entraînement (2) et disposée de telle sorte que la pièce à usiner y soit en appui par sa face extrême décolletée, caractérisé par le fait que la plaque de coupe (4) est fixée amoviblement sur un plateau de support (3) mobile par oscillations et logé dans un évidement (5) d'un chariot de serrage (6) muni d'un appui de pièces à usiner et mobile en pouvant être bloqué en continu dans la direction du déplacement du plateau de support (3), sur la plaque de recouvrement (10) du boîtier (1) recevant le moteur et/ou la transmission, de telle manière que la surface de recouvrement de la plaque de coupe (4) soit en saillie au-dessus de la face supérieure dudit chariot et par le fait que l'appui des pièces à usiner comprend une surface d'appui (7) en chevron fixée au chariot de serrage (6) et disposée sensiblement perpendiculairement.

2. Dispositif selon la revendication 1, caractérisé par le fait que la face supérieure de la plaque de coupe (4) est réalisée sous la forme d'une surface de raclement du type lime taillée.

3. Dispositif selon la revendication 1 ou 2, caractérisé par le fait que le chariot de serrage (6) peut être fixé au boîtier (1) au moyen de mors de serrage (9).

4. Dispositif selon l'une des revendications 1 à 3, caractérisé par le fait que le plan déplacement de la plaque de coupe (4) est incliné par rapport à l'horizontale, la surface d'appui (7) en chevron du chariot de serrage (6) étant située à l'extrémité inférieure.

5. Dispositif selon l'une des revendications 1 à 4, caractérisé par des dispositifs de serrage en vue de retenir la pièce à usiner.

6. Dispositif selon l'une des revendications 1 à 5, caractérisé par des dispositifs de transport commandés de préférence par impulsions pour l'amenée et l'évacuation des pièces à usiner.

7. Dispositif selon l'une des revendications 1 à 6, caractérisé par le fait qu'il est réalisé sous la forme d'une pièce pouvant être bridée sur des moteurs électriques (2) courants dans le commerce et dotée d'une transmission de renvoi à excentrique.

FIG. 1

FIG.2

FIG. 3